(19) **Europäisches Patentamt**

**European Patent Office**

**Office européen des brevets**

(11) Veröffentlichungsnummer: **0 319 747**
**A1**

(12) # EUROPÄISCHE PATENTANMELDUNG

(21) Anmeldenummer: 88119010.2

(51) Int. Cl.4: **F16H 45/00 , F16D 47/06**

(22) Anmeldetag: 17.11.88

(30) Priorität: 24.11.87 DE 3739692

(43) Veröffentlichungstag der Anmeldung:
14.06.89 Patentblatt 89/24

(84) Benannte Vertragsstaaten:
AT DE FR GB IT SE

(71) Anmelder: Xaver Fendt & Co.
Johann-Georg-Fendt-Strasse 4
D-8952 Marktoberdorf(DE)

Anmelder: VOITH TURBO GMBH & CO. KG
Postfach 15 55
D-7180 Crailsheim(DE)

(72) Erfinder: Fendt, Hermann, Dr.
Jahnstrasse 10
D-8952 Marktoberdorf(DE)
Erfinder: Dziuba, Peter
Hochstätterbetrg 33 1/15
D-8951 Lenngenwang(DE)
Erfinder: Reisch, Johann
Saliterstrasse 90
D-8952 Marktoberdorf(DE)
Erfinder: Sauerteig, Erhard
Bahnhofstrasse 60
D-8011 Baldham bei München(DE)
Erfinder: Weber, Wolfgang
Voithstrasse 1
D-7180 Crailsheim(DE)

(54) **Kupplungsanordnung in einem Antrieb für Nutzfahrzeuge.**

(57) Bei den bisher gebräuchlichen Antrieben in Nutzfahrzeugen mit einer im Leistungsfluß angeordneten Turbokupplung und nachfolgenden Anfahr- und Schaltkupplung können die spezifischen Vorteile der Turbokupplung, die elastische Arbeitsweise, nicht ausgenutzt werden, wenn das Arbeitsfahrzeug mit Nenndrehzahl des Antriebsmotors angefahren werden soll. Auch wird dabei die Anfahrkupplung extrem beansprucht. Die neue Kupplungsanordnung soll dementsprechend beim Anfahren des Nutzfahrzeuges in der beschriebenen Weise die Vorteile der Turbokupplung auszunützen gestatten und die Beanspruchung der Anfahrkupplung wesentlich herabsetzen.

Um dies zu erreichen, ist das Beschleunigen der Eingangswelle (13) des Schaltgetriebes (5) einer im Leistungsfluß zwischen der Brennkraftmaschine (1) und dem Pumpenrad (7) angeordneten Rutschkupplung (3) übertragen.

Die Kupplungsanordnung eignet sich für alle Fahrzeuge, die mit einer Nebenabtriebswelle zum Antrieb von mitgeführten Arbeitsgeräten ausgerüstet sind.

Fig. 1

## Kupplungsanordnung in einem Antrieb für Nutzfahrzeuge

Die Erfindung betrifft eine Kupplungsanordnung in einem Antrieb für Nutzfahrzeuge, insbesondere für Ackerschlepper, mit einer im Leistungsfluß von einer Verbrennungskraftmaschine zu einem Schaltgetriebe angeordneten hydrodynamischen Strömungskupplung, die ein von der Verbrennungskraftmaschine angetriebenes schalenförmiges Außenteil aufweist, innerhalb dem ein Pumpenrad und ein Turbinenrad untergebracht sind, wobei das Turbinenrad über eine restmomentfrei ausrückende Kupplung mit der beim Anfahren des Fahrzeuges während einer Kupplungsrutschphase beschleunigten Eingangswelle des Schaltgetriebes kuppelbar ist.

Antriebe mit einer Kupplungsanordnung der bezeichneten Gattung werden von der Anmelderin seit langer Zeit in Nutzfahrzeugen eingebaut, da sie insbesondere, in Verbindung mit Ackerschleppern eine Reihe wichtiger Vorteile bieten. Diese Vorteile resultieren im wesentlichen aus der Verwendung der Strömungskupplungen, kurz Turbokupplungen, die die Eigenschaft haben, bei niedrigen Antriebsdrehzahlen praktisch kein Drehmoment zu übertragen. Die Brennkraftmaschine kann daher nicht abgewürgt werden, wenn die Turbokupplung durch ein Lastmoment belastet wird, das größer ist als das Antriebsmoment. Daraus resultiert u. a. die Möglichkeit eines ruck- und verschleißfreien schnellen Anfahrens des Fahrzeuges aus dem Stand auch unter Last. Eine der Turbokupplung im Kraftfluß nachgeordnete Anfahr- und Schaltkupplung bleibt bei diesem Vorgang von jeglichem Verschleiß verschont, da sie bereits bei noch stehendem Fahrzeug im Leerlauf des Antriebsmotors eingerückt werden Kann und die Beschleunigung des Fahrzeuges allein über die Turbokupplung erfolgt. Berücksichtigt man deshalb allein die Belastung in dieser Betriebsweise, so könnte die Anfahr- und Schaltkupplung verhältnismäßig klein und damit platzsparend gebaut werden. In der Landwirtschaft sind jedoch über die geschilderte Einsatzweise hinaus auch Einsatzfälle üblich, in denen das Fahrzeug bei Nenndrehzahl der Brennkraftmaschine angefahren werden muß. Es sind dies jene Arbeiten, zu deren Ausführung besondere, vom Schlepper mitgeführte und von dessen Zapfwelle angetriebene Arbeitsgeräte benötigt werden. Derartige Arbeitsgeräte arbeiten nur bei ihrer Nenndrehzahl optimal, die sie aber wegen des direkten Antriebs der Zapfwelle von der Kurbelwelle der Brennkraftmaschine erst bei deren Nenndrehzahl erreichen. Je weiter die Antriebsdrehzahl der Brennkraftmaschine unterhalb ihrer Nenndrehzahl liegt, umso unsauberer wird die Qualität der ausgeführten Arbeit und umso eher Kann das Arbeitsgerät, beispielsweise ein Häcksler, verstopfen. Damit dies nicht unmittelbar nach dem Einfahren des Ackerschleppers in das Erntegut geschieht, muß der Fahrer bei noch ausgerückter Anfahr- und Schaltkupplung die Brennkraftmaschine auf ihre Nenndrehzahl bringen. Die Turbokupplung, deren Pumpenrad immer die gleiche Drehzahl wie die Brennkraftmaschine aufweist, besitzt in dieser Situation annähernd ihre maximale übertragungsfähigkeit für Drehmomente und verhält sich praktisch wie eine starre Kupplung, d. h. als sei sie nicht vorhanden. Aufgrund dieses Verhaltens der Turbokupplung entspricht die Drehzahl der antreibenden Hälfte der Anfahr- und Schaltkupplung bis auf einen geringen Schlupf von ca. 1% der Nenndrehzahl der Brennkraftmaschine. Wenn das Fahrzeug nun durch Einrücken der Anfahr- und Schaltkupplung aus dem Stand beschleunigt werden soll, so muß die mit der Eingangswelle des Schaltgetriebes in Verbindung stehende abtreibende Hälfte der Anfahr und Schaltkupplung auf die Drehzahl der antreibenden Hälfte beschleunigt werden. Abgesehen davon, daß dabei ein sehr großer Drehzahlunterschied auszugleichen ist, erfolgt dieser Drehzahlausgleich von Anfang an unter einer dem Anfahrwiderstand des Fahrzeuges entsprechenden Last. Unter diesen Bedingungen hat die Anfahr- und Schaltkupplung unter Umständen eine verhältnismäßig lange Rutschphase zu überstehen, zumal der Fahrer darauf zu achten hat, daß nicht durch zu schnelles Einrücken der Anfahr- und Schaltkupplung die Drehzahl der Brennkraftmaschine unzulässig stark gedrückt wird. Damit die Anfahr- und Schaltkupplung in ihrer Rutschphase einer extremen Beanspruchung ausgesetzt, die noch dadurch verschärft wird, daß die Kupplung zum einfachen und schnellen Schalten restmomentfrei ausgerückt werden können muß. Das erfordert praktisch den Einsatz einer trockenen Kupplung, die aber in Abhängigkeit von den hohen in der Rutschphase auftretenden Belastungen sehr groß zu dimensionieren ist, wenn ihre Standzeit den landtechnischen Erwartungen genügen soll. Mit zunehmender Größe wächst aber auch das Trägheitsmoment der abtriebsseitigen Hälfte der Anfahrund Schaltkupplung, was wiederum stärkere Synchronisierungen im Schaltgetriebe erfordert, um ein leichtes und schnelles Schalten zu ermöglichen.

Ausgehend von dem aufgezeigten Stand der Technik besteht die Aufgabe der Erfindung deshalb darin, eine Kupplungsanordnung der eingangs beschriebenen Gattung in einem Antrieb für Nutzfahrzeuge zu schaffen, bei der die elastische Drehmomentübertragung solcher Turbokupplungen nicht nur beim Anfahren aus dem Leerlauf der Brennkraftmaschine sondern auch mit Nenndrehzahl der Brennkraftmaschine voll zur Geltung gelangen kann.

Zur Lösung dieser Aufgabe ist die die Beschleunigung des Schaltgetriebes bewirkende Rutschkupplung im Leistungsfluß zwischen der Verbrennungskraftmaschine und dem Pumpenrad angeordnet.

Dadurch, daß gemäß der Erfindung die Funktion der Anfahr-und Schaltkupplung auf zwei verschiedene Kupplungen aufgeteilt ist, von denen die zum Anfahren benutzte Rutschkupplung im Leistungsfluß vor dem Pumpenrad liegt, ist nunmehr sichergestellt, daß die wertvolle Eigenschaft der Turbokupplung, die verschleißfreie Drehzahlangleichung zweier Wellen bei allen vorkommenden Anfahrvorgängen des Fahrzeuges sei dies nun unter zapfwellenungebundener Last aus der Leerlaufdrehzahl der Brennkraftmaschine heraus oder aus deren voller Nenndrehzahl unter zapfwellengebundener Last, ausgenutzt werden kann. Die Anfahrkupplung ist deshalb in dem Ausmaß, in dem Drehzahlangleichung von der Turbokupplung übernommen wird, entlastet. Außerdem arbeitet die Turbokupplung nunmehr beim Anfahren unter Nenndrehzahl der Brennkraftmaschine noch elastischer als bisher beim Anfahren eines Fahrzeuges unter zapfwellenungebundener Last, da durch das Beschleunigen des Pumpenrades aus dem Stand heraus auch der untere Drehzahlbereich bis zur Leerlaufdrehzahl der Brennkraftmaschine, in dem die Drehmomentenübertragungsfähigkeit der Turbokupplung noch sehr gering ist, ausgenutzt wird.

Eine weitere bedeutende Verbesserung durch die Erfindung ergibt sich durch das Kennzeichen des Anspruches 2, durch das es zum einen möglich ist, die Massen der Teile, die von der Schaltkupplung bei einer Fahrtrichtungsumkehr zu synchronisieren sind, wesentlich verringert. Außerdem ist durch dieses Merkmal die Möglichkeit gegeben, die Rutschkupplung, die nun nicht mehr zur Erleichterung des Schaltens des Schaltgetriebes drehmomentfrei ausrückbar sein muß, ohne zusätzlichen Aufwand ölgekühlt auszuführen, da sie ohne Schwierigkeiten in dem schalenförmigen, das Arbeitsöl der Turbokupplung enthaltenden Außenteil untergebracht werden kann. Dadurch wird nicht nur die Lebensdauer der Rutschkupplung weiter heraufgesetzt, sondern auch die Abfuhr der während der Rutschphase anfallenden Wärme über das rotierende Außenteil verbessert. Im Ergebnis kann so die axiale Ausdehnung der Rutschkupplung deutlich reduziert werden, was sich unmittelbar auch in einer verringerten axialen Länge der gesamten Kupplungsanordnung niederschlägt.

Da die anläßlich einer schnellen Fahrtrichtungsumkehr von der Schaltkupplung zu verrichtende Synchronisierungsarbeit wegen der geringen, nur aus dem Pumpenrad und der zugeordneten Hälfte der Rutschkupplung bestehenden Masse vernachlässigbar gering ist, reicht es nach Anspruch 4 aus, die Schaltkupplung auf das maximal zu übertragende Drehmoment auszulegen. Auch diese Maßnahme bringt eine Verringerung des axialen Platzbedarfes der Kupplungsanordnung mit sich.

Noch weiter verringert wird der axiale Platzbedarf der Kupplungsanordnung dann, wenn nach Anspruch 5 die Schaltkupplung innerhalb des Außenteils untergebracht und nach Anspruch 6 das Turbinenrad drehbar auf der Ausgangswelle gelagert ist und die Schaltkupplung das Turbinenrad mit der Ausgangswelle verbindet.

Weitere vorteilhafte Einzelheiten und Merkmale der Erfindung gehen aus den übrigen Patentansprüchen hervor.

Die Erfindung wird im folgenden anhand einer Zeichnung näher erläutert. Es zeigt:

Fig. 1 Eine schematische Ansicht der erfindungsgemäßen Kupplungsanordnung und

Fig. 2 ein Diagramm, in welchem die von der Turbokupplung übertragbaren Drehmomente in Abhängigkeit vom auftretenden Schlupf über die Drehzahl des Pumpenrades aufgetragen sind.

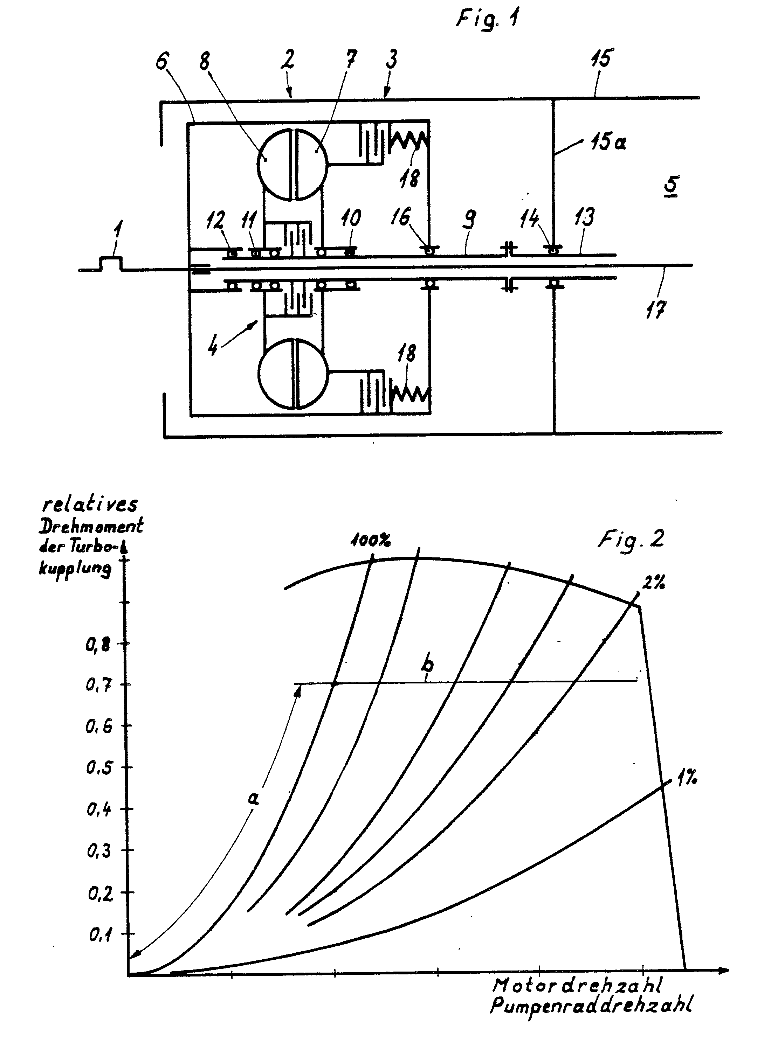

Der in Fig. 1 gezeigte schematische Antrieb für einen Ackerschlepper besteht aus einer Brennkraftmaschine 1, der im Leistungsfluß dahinter angeordneten erfindungsgemäßen Anordnung einer Turbokupplung 2, Rutschkupplung 3 und Schaltkupplung 4 sowie einem synchronisierten Schaltgetriebe 5.

Die Turbokupplung 2 besteht aus einem mit der Kurbelwelle der Brennkraftmaschine 1 in Antriebsverbindung stehenden schalenförmigen Außenteil 6, sowie einem Pumpenrad 7 und einem Turbinenrad 8, welche beiden Räder im Innern des Außenteils 6 untergebracht und auf der Ausgangswelle 9 der Turbokupplung 2 in Lagern 10,11 drehbar gelagert sind. Die Ausgangswelle 9 ist an der antriebsseitigen Wandung des Außenteils 9 mittels eines Lagers 12 drehbar gelagert und mit der Eingangswelle 13 des Schaltgetriebes 5 drehfest sowie biegesteif verbunden. Diese ist ihrerseits über ein Lager 14 in der Zwischenwand 15a eines die Turbokupplung 2 und das Schaltgetriebe 5 aufnehmenden Gehäuses 15 abgestützt. Die der Brennkraftmaschine 1 abgewandte Wandung des Außenteils 6 ist mittels eines Lagers 16 auf der Ausgangswelle 9 gelagert. Eine dem Antrieb der nicht gezeigten Zapfwelle des Ackerschleppers dienende Welle 17 ist durch die hierfür in Längsrichtung durchbohrte Eingangwelle 13 des Schaltgetriebes 5 und Ausgangswelle 9 der Turbokupplung 2 geführt und drehfest mit dem Außenteil 6 verbunden.

Die Rutschkupplung 3 befindet sich innerhalb des Außenteils 6 der Turbokupplung 2 und verbindet in eingerücktem Zustand das Pumpenrad 7 mit dem Außenteil 6. Infolge dieser Anordnung ist die Rutschkupplung 3 von der Arbeitsflüssigkeit der Turbokupplung 2 umspült und gekühlt.

Die Schaltkupplung 4 ist hydraulisch betätigbar und kuppelt in eingerücktem Zustand das Turbinenrad 8 mit der Ausgangswelle 9. Ausgelegt ist die Schaltkupplung 4 auf die sichere Übertragungsfähigkeit lediglich des maximalen Drehmoments der Brennkraftmaschine 1. Ihr Bauraum kann dadurch so gering gehalten werden, daß sie ebenfalls im Innern des Außenteils 6 Platz findet. Durch geeignete Maßnahmen ist die Schaltkupplung 4 gegen Zutritt der Arbeitsflüssigkeit der Turbokupplung 2 geschützt, so daß sie in ausgerücktem Zustand den Leistungsfluß vom Turbinenrad 8 zur Ausgangswelle 9 vollständig restmomentfrei unterbricht und ein leichtes Schalten des Schaltgetriebes 5 möglich macht.

Die Betätigung der Rutschkupplung 3 und der Schaltkupplung 4 erfolgt mit Hilfe von ansich bekannten Betätigungsmitteln in der Weise, daß beim Niedertreten des Kupplungspedals im Ausrücksinn über praktisch den gesamten Pedalweg ausschließlich die Rutschkupplung 3 nach und nach gegen die Kraft von Federn 18 ausgerückt wird. Erst am Ende des Pedalweges betätigt das Kupplungspedal einen elektrischen Schalter, der im Stromkreis eines Ventils liegt und eine Druckbeaufschlagung der Schaltkupplung 4 bewirkt.

Die Funktionsweise der Kupplungsanordnung beim Anfahren des Ackerschleppers unter zapfwellenungebundener Last erfolgt in gleicher Weise wie bei den bisher bekannten Kupplungsanordnungen. Das bedeutet, bei eingelegtem Gang und eingerückter Schalt- 4 und Rutschkupplung 5 wird das Pumpenrad 7 nach der Verstellung des Drehzahlverstellhebels der Brennkraftmaschine 1 über das von der Brennkraftmaschine 1 angetriebene Außenteil 6 von der Leerlaufdrehzahl auf die gewünschte Arbeitsdrehzahl beschleunigt. Dabei überträgt die Turbokupplung 2 mit zunehmender Drehzahl des Pumpenrades 7 ein immer größer werdendes Drehmoment und setzt den Ackerschlepper schließlich, wenn dieses Drehmoment größer ist als das Lastmoment, in Bewegung.

Zum Anfahren des Ackerschleppers unter zapfwellengebundener Last aus dem Stand wird nach dem Einlegen des gewünschten Ganges bei noch ausgerückter Schalt- 4 und Rutschkupplung 3 die Brennkraftmaschine 1 auf ihre Nenndrehzahl beschleunigt und das Kupplungspedal freigegeben. Dabei wird zunächst über den oben erwähnten Schalter die Schaltkupplung 4 vollständig und anschließend die Rutschkupplung 3 dosiert eingerückt. Solange nur die Schaltkupplung eingerückt ist, befindet sich das Pumpenrad 7 der Turbokupplung 2 wegen des stehenden Ackerschleppers im Stillstand. Mit dem Einrücken der Rutschkupplung 4 und zunehmender Drehzahlangleichung des Pumpenrades 7 an das mit Nenndrehzahl der Brennkraftmaschine 1 rotierende Außenteil 6 wird das Turbinenrad 8 zunehmend beschleunigt und entsprechend dem Kurventeil a in Fig. 2 ein immer größer werdendes Drehmoment auf die Eingangswelle 13 des Schaltgetriebes 5 übertragen. Sobald dieses Drehmoment größer ist als die Fahrwiderstände, setzt sich das Fahrzeug nach der Linie b in Fig. 2 in Bewegung, wobei die Drehzahl des Pumpenrades 7 mit zunehmendem Eingriff der Rutschkupplung 3 schließlich auf die Nenndrehzahl der Brennkraftmaschine 1 steigt. Bis zum Erreichen dieser Drehzahl hat sich der anfänglich 100% betragene Schlupf der TurboKupplung 2 auf den bei normaler Belastung herrschenden Normalwert von ca. 2% verringert. Der Ackerschlepper hat nunmehr seine Arbeitsfahrgeschwindigkeit erreicht und befindet sich im stationären Betrieb.

Wesentlich bei dem zuletzt beschriebenen Anfahrvorgang ist, daß das Beschleunigen des Pumpenrades 7 mit Hilfe der Rutschkupplung 3 praktisch gleichzeitig erfolgt mit der Beschleunigung des Turbinenrades 8. Auf diese Weise wird auch hier die Turbokupplung 2 dazu benutzt, einen Großteil des Drehzahlunterschiedes zwischen dem praktisch aus dem Stand zu beschleunigenden Turbinenrad 8 und dem mit Nenndrehzahl der Brennkraftmaschine 1 umlaufenden Außenteil 6 auszugleichen. Da ferner bei noch relativ langsam drehendem Pumpenrad 7 das von der Turbokupplung 2 übertragene Moment verhältnismäßig gering ist, wird während dieses Zeitraumes die Rutschkupplung 3 nur zu einem Bruchteil ihres Leistungsvermögens beansprucht.

## Ansprüche

1. Kupplungsanordnung in einem Antrieb für Nutzfahrzeuge, insbesondere für Ackerschlepper, mit einer im Leistungsfluß von einer Brennkraftmaschine (1) zu einem Schaltgetriebe (5) angeordneten hydrodynamischen Strömungskupplung (2), die ein von der Brennkraftmaschine (1) angetriebenes schalenförmiges Außenteil (6) aufweist, innerhalb dem ein Pumpenrad (7) und ein Turbinenrad (8) untergebracht sind, das über eine restmomentfrei ausrückende Kupplung mit der beim Anfahren des Fahrzeuges während einer Kupplungsrutschphase beschleunigten Eingangswelle (13) des Schaltgetriebes (5) kuppelbar ist, **dadurch gekennzeichnet,**

daß das Beschleunigen der Eingangswelle (13) des Schaltgetriebes (5) einer im Leistungsfluß zwischen der Brennkraftmaschine (1) und dem Pumpenrad (7) angeordneten Rutschkupplung (3) übertragen ist.

2. Kupplungsanordnung nach Anspruch 1, **dadurch gekennzeichnet,**
daß das schalenförmige Außenteil (6) und das Pumpenrad (7) als gesonderte, unabhängig voneinander drehbare Bauteile ausgebildet sind und über die Rutschkupplung (3) miteinander kuppelbar sind.

3. Kupplungsanordnung nach Anspruch 1 oder 2, **dadurch gekennzeichnet,**
daß die Rutschkupplung (3) unter der Kraft von Federn (18) einrückbar ist.

4. Kupplungsanordnung nach den Ansprüchen 1 bis 3, **dadurch gekennzeichnet,**
daß die restmomentfrei ausrückende Kupplung (Schaltkupplung (4)) auf das maximal zu übertragende Drehmoment ausgelegt ist.

5. Kupplungsanordnung nach den Ansprüchen 1 bis 4, **dadurch gekennzeichnet,**
daß die Schaltkupplung (4) innerhalb des Außenteils (6) angeordnet ist.

6. Kupplungsanordnung nach den Ansprüchen 1 bis 5, **dadurch gekennzeichnet,**
daß das Turbinenrad (8) auf der Ausgangswelle (9) der Strömungskupplung (2) gelagert ist und die Schaltkupplung (4) das Turbinenrad (8) mit der Ausgangswelle (9) verbindet.

7. Kupplungsanordnung nach den Ansprüchen 1 bis 6, **dadurch gekennzeichnet,**
daß die Rutschkupplung (3) und die Schaltkupplung (4) mittels eines einzigen Kupplungspedals derart betätigbar ist, daß ausgehend von der Pedalstellung des unbetätigten Kupplungspedals über den größten Teil des Kupplungspedalweges ausschließlich die Rutschkupplung (3) bis zu deren Ausrückung und über einen Kleinen Teil des Kupplungspedalweges ausschließlich die Schaltkupplung (4) betätigbar ist.

Fig. 1

Fig. 2

relatives
Drehmoment
der Turbokupplung

Motordrehzahl
Pumpenraddrehzahl

Fe 1461

| Europäisches Patentamt | **EUROPÄISCHER RECHERCHENBERICHT** |
|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 160 832 (KLEIN)<br>* Seite 2; Figur * | 1 | F 16 H 45/00<br>F 16 D 47/06 |
| A | | 2 | |
| | --- | | |
| A | US-A-4 733 761 (SAKAKIBARA)<br>* Spalten 10-11; Figuren 8-12 * | 1,4-6 | |
| | --- | | |
| A | FR-A-1 388 035 (FERODO)<br>* Seiten 3-4; Figur * | 1-7 | |
| | --- | | |
| A | GB-A-1 214 610 (BORG-WARNER)<br>* Seite 2; Figur * | 1,2 | |
| | ----- | | |

|  |
|---|
| **RECHERCHIERTE SACHGEBIETE (Int. Cl.4)** |
| F 16 H 45/00<br>F 16 D 47/00 |

Der vorliegende Recherchenbericht wurde für alle Patentansprüche erstellt

| Recherchenort | Abschlußdatum der Recherche | Prüfer |
|---|---|---|
| DEN HAAG | 10-02-1989 | FLORES E. |